(19) Europäisches Patentamt
European Patent Office
Office européen des brevets

(11) **EP 4 053 181 A1**

(12) **EUROPEAN PATENT APPLICATION**
published in accordance with Art. 153(4) EPC

(43) Date of publication:
**07.09.2022  Bulletin 2022/36**

(21) Application number: **20880885.7**

(22) Date of filing: **28.10.2020**

(51) International Patent Classification (IPC):
**C08F 265/06** (2006.01)    **C08F 283/06** (2006.01)
**C08L 51/00** (2006.01)    **C08L 51/08** (2006.01)
**C08F 2/22** (2006.01)    **C08F 2/44** (2006.01)

(52) Cooperative Patent Classification (CPC):
**C08F 2/22; C08F 2/44; C08F 265/06; C08F 283/06;
C08L 51/00; C08L 51/08**

(86) International application number:
**PCT/JP2020/040421**

(87) International publication number:
**WO 2021/085470 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2019  JP 2019196139**

(71) Applicant: AGC INC.
**Chiyoda-ku,
Tokyo 1008405 (JP)**

(72) Inventors:
• **HIGUCHI, Shinya
  Tokyo 100-8405 (JP)**
• **TAKAZAWA, Masahiro
  Tokyo 100-8405 (JP)**
• **LAI, Yingwei
  Tokyo 100-8405 (JP)**
• **EBATA, Shiro
  Tokyo 100-8405 (JP)**
• **KOSE, Takehiro
  Tokyo 100-8405 (JP)**

(74) Representative: **Müller-Boré & Partner
Patentanwälte PartG mbB
Friedenheimer Brücke 21
80639 München (DE)**

(54) **METHOD FOR PRODUCING POLYTETRAFLUOROETHYLENE AQUEOUS DISPERSION**

(57)    To provide a method for producing an aqueous dispersion of polytetrafluoroethylene, whereby formation of fluorinated oligomers as byproducts is little and CFT of a coating film to be formed is large.

A method for producing an aqueous dispersion of polytetrafluoroethylene, which comprises step A1 of polymerizing a non-fluorinated monomer in an aqueous medium to obtain a solution 1 containing a polymer comprising units based on said non-fluorinated monomer, step A2 of conducting polymerization of tetrafluoroethylene in said solution 1 without substantially adding a surfactant to said solution 1, to obtain an aqueous emulsion containing polytetrafluoroethylene particles, and step A3 of adding a nonionic surfactant to said aqueous emulsion, and then concentrating said aqueous emulsion to obtain an aqueous dispersion of polytetrafluoroethylene, wherein the amount of said non-fluorinated monomer used is at most 200 mass ppm to the amount of said tetrafluoroethylene supplied to the polymerization system.

EP 4 053 181 A1

**Description**

TECHNICAL FIELD

The present invention relates to a method for producing an aqueous dispersion of polytetrafluoroethylene.

BACKGROUND ART

Polytetrafluoroethylene is used in various applications because of its excellent properties.

Heretofore, at the time of producing polytetrafluoroethylene, a fluorinated surfactant such as perfluorooctanoate has been used. However, from the environmental point of view, it has been desired to refrain from using a fluorinated surfactant.

Therefore, as one of new methods for producing polytetrafluoroethylene, a method of using a hydrocarbon-containing surfactant at the time of polymerizing tetrafluoroethylene has been proposed (Patent Document 1).

PRIOR ART DOCUMENT

PATENT DOCUMENT

Patent Document 1: JP-A-2016-537499

DISCLOSURE OF INVENTION

TECHNICAL PROBLEM

On the other hand, when a hydrocarbon-containing surfactant is used, a chain transfer reaction occurs to the hydrocarbon-containing surfactant at the time of polymerizing tetrafluoroethylene. Therefore, in this method of using the hydrocarbon-containing surfactant, presence of fluorinated oligomers having various chain length distributions (especially fluorinated oligomers with hydrophilic functional groups), which have never been confirmed in the conventional method of using a fluorinated surfactant, has been confirmed in the product. Such fluorinated oligomers are byproducts formed by the hydrocarbon-containing surfactant as the starting point of chain transfer, as mentioned above. The presence of such byproducts is undesirable from the environmental viewpoint.

With respect to the aqueous dispersion containing polytetrafluoroethylene particles, it is desired that the crack limit thickness (Critical Film Thickness, hereinafter referred to as CFT) of the coating film to be formed, is large. The above CFT corresponds to the thickness at which cracks begin to occur, when the aqueous dispersion containing polytetrafluoroethylene particles is applied to form a coating film of a certain thickness and then baked.

The present invention has an object to provide a method for producing an aqueous dispersion of polytetrafluoroethylene, whereby formation of fluorinated oligomers being by-products, is little and CFT of the coating film to be formed is large.

SOLUTION TO PROBLEM

As a result of extensive studies, the present inventors have found it possible to accomplish the above object by the following construction.

(1) A method for producing an aqueous dispersion of polytetrafluoroethylene, which comprises

step A1 of polymerizing a non-fluorinated monomer in an aqueous medium to obtain a solution 1 containing a polymer comprising units based on the non-fluorinated monomer,
step A2 of conducting polymerization of tetrafluoroethylene in the solution 1 without substantially adding a surfactant to the solution 1 to obtain an aqueous emulsion containing polytetrafluoroethylene particles, and
step A3 of adding a nonionic surfactant to the aqueous emulsion, and then concentrating the aqueous emulsion to obtain an aqueous dispersion of polytetrafluoroethylene, wherein
the amount of the non-fluorinated monomer used is at most 200 mass ppm to the amount of the tetrafluoroethylene supplied to the polymerization system.

(2) The method for producing an aqueous dispersion of polytetrafluoroethylene according to (1), wherein the non-fluorinated monomer is a monomer represented by the formula (1) as described later.

(3) The method of producing an aqueous dispersion of polytetrafluoroethylene according to (1) or (2), wherein the content of the polytetrafluoroethylene particles in the aqueous dispersion of polytetrafluoroethylene is from 50 to 70 mass%.

(4) The method of producing an aqueous dispersion of polytetrafluoroethylene according to any one of (1) to (3), wherein the content of said nonionic surfactant in said aqueous dispersion of polytetrafluoroethylene is from 1 to 20 mass% to the mass of polytetrafluoroethylene.

(5) A method for producing an aqueous dispersion of polytetrafluoroethylene, which comprises

step B1 of mixing at least one nucleation additive selected from the group consisting of polyalkylene oxide compounds and hydrocarbon-containing surfactants, and an oxidizing agent in an aqueous medium to obtain a solution 2,

step B2 of conducting polymerization of tetrafluoroethylene in the solution 2 without substantially adding a surfactant to the solution 2, to obtain an aqueous emulsion containing polytetrafluoroethylene particles, and

step B3 of adding a nonionic surfactant to the aqueous emulsion, and then concentrating the aqueous emulsion to obtain an aqueous dispersion of polytetrafluoroethylene, wherein

the amount of the nucleation additive used is at most 100 mass ppm to the amount of tetrafluoroethylene supplied to the polymerization system.

(6) The method for producing an aqueous dispersion of polytetrafluoroethylene according to (5), wherein the content of the polytetrafluoroethylene particles in the aqueous dispersion of polytetrafluoroethylene is from 50 to 70 mass% to the entire amount of the aqueous dispersion of polytetrafluoroethylene.

(7) The method for producing an aqueous dispersion of polytetrafluoroethylene according to (5) or (6), wherein said nucleation additive is a polyalkylene oxide compound.

(8) The method for producing an aqueous dispersion of polytetrafluoroethylene according to any one of (5) to (7), wherein the amount of said oxidizing agent used is from 0.5 to 100 mass ppm to the entire mass of said aqueous medium.

(9) The method for producing an aqueous dispersion of polytetrafluoroethylene according to any one of (5) to (8), wherein the content of said nonionic surfactant in said aqueous dispersion of polytetrafluoroethylene is from 1 to 20 mass% to the mass of polytetrafluoroethylene.

ADVANTAGEOUS EFFECTS OF INVENTION

According to the present invention, it is possible to provide a method for producing an aqueous dispersion of polytetrafluoroethylene, whereby formation of fluorinated oligomers being byproducts, is small and CFT of the coating film to be formed is large.

DESCRIPTION OF EMBODIMENTS

The meanings of the terms in the present invention are as follows.

A "unit" is a general term for an atomic group derived from one molecule of a monomer, which is directly formed by polymerization of the monomer.

The range of numerical values expressed by using " to " means a range that includes the numerical values listed before and after " to " as the lower and upper limit values.

Characteristic features of the method for producing an aqueous dispersion of polytetrafluoroethylene (hereinafter referred to as "PTFE") may be the point of using a solution 1 containing a polymer containing units based on a non-fluorinated monomer (hereinafter referred to also as the "specific polymer") and an aqueous medium, or a solution 2 obtainable by mixing, in an aqueous medium, at least one nucleation additive selected from the group consisting of polyalkylene oxide compounds and hydrocarbon-containing surfactants, and an oxidizing agent, the point of using substantially no surfactant at the time of conducting the polymerization of tetrafluoroethylene (hereinafter referred to also as "TFE"), and the point of adjusting the amounts of the non-fluorinated monomer and the nucleation additive to be used.

The solution 1 and the solution 2 can provide a hydrophobic environment in which polymerization of TFE can proceed well, and further, substantially no surfactant is used, whereby the polymerization of TFE can be proceeded stably while suppressing the occurrence of chain transfer. As a result, it is possible to suppress the formation of fluorinated oligomers being byproducts. Further, it has been found that by adjusting the amounts of the non-fluorinated monomer and the nucleation additive, CFT of the coating film to be formed, can be increased.

Further, the fluorinated oligomers mainly include oligomers having $CF_2$ linked together to have from about 6 to 34 carbon atoms.

«First embodiment»

As the first embodiment of the method for producing an aqueous dispersion of PTFE, an embodiment having the following three steps may be mentioned.

Step A1: A step of polymerizing a non-fluorinated monomer in an aqueous medium to obtain a solution 1 containing the specific polymer.

Step A2: A step of conducting polymerization of TFE in the solution 1 without substantially adding any surfactant to the solution 1, to obtain an aqueous emulsion containing PTFE particles.

Step A3: A step of adding a nonionic surfactant to the aqueous emulsion, and then concentrating the aqueous emulsion to obtain an aqueous dispersion of PTFE.

Further, in the first embodiment, the amount of the non-fluorinated monomer used, is at most 200 mass ppm to the amount of TFE supplied to the polymerization system.

In the following, the present invention will be described in detail by taking the above preferred embodiment as an example.

<Step A1>

Step A1 is a step of polymerizing a non-fluorinated monomer in an aqueous medium to obtain a solution 1 containing the specific polymer.

In the following, first, the materials to be used in step A1 will be described in detail, and then, the procedure of step A1 will be described in detail.

(Non-fluorinated monomer)

The non-fluorinated monomer is a monomer containing no fluorine atom.

The non-fluorinated monomer usually has a polymerizable group, and the number of polymerizable groups is preferably from 1 to 3, more preferably 1.

The polymerizable group is preferably an ethylenically unsaturated group. More specifically, an acryloyl group, a methacryloyl group, a vinyl ether group, a vinyl ester group, a vinyl group or an allyl group may be mentioned, and an acryloyl group, a methacryloyl group, a vinyl ester group or a vinyl ether group is preferred.

The non-fluorinated monomer is preferably a monomer represented by the formula (1).

$$\text{Formula (1):} \qquad CH_2=CR^{11}\text{-}L^1\text{-}R^{12}$$

$R^{11}$ represents a hydrogen atom or an alkyl group. The number of carbon atoms in the alkyl group is preferably from 1 to 3, more preferably 1.

$L^1$ represents a single bond, -CO-O-*, -O-CO-* or -O-. * represents a bonding position to $R^{12}$. For example, when $L^1$ is -CO-O-*, the formula (1) represents $CH_2=CR^{11}$-CO-O-$R^{12}$.

$R^{12}$ represents a hydrogen atom, an alkyl group, an alkenyl group or a nitrile group. However, when $L^1$ is a single bond, $R^{12}$ is a nitrile group.

The number of carbon atoms in the alkyl group and the alkenyl group is preferably from 1 to 10, more preferably from 1 to 6, further preferably from 1 to 4.

The alkyl group may be linear or cyclic. When the alkyl group is cyclic, it corresponds to a cycloalkyl group.

The alkenyl group may be linear or cyclic.

The monomer represented by the formula (1) is preferably a monomer selected from the group consisting of a monomer represented by the formula (1-1), a monomer represented by the formula (1-2), a monomer represented by the formula (1-3) and a monomer represented by the formula (1-4).

$$\text{Formula (1-1):} \qquad CH_2=CR^{11}\text{-CO-O-}R^{13}$$

$$\text{Formula (1-2):} \qquad CH_2=CR^{11}\text{-O-CO-}R^{14}$$

$$\text{Formula (1-3):} \qquad CH_2=CR^{11}\text{-O-}R^{15}$$

$$\text{Formula (1-4):} \qquad CH_2=CR^{11}\text{-}R^{16}$$

The definition of $R^{11}$ is as described above.

$R^{13}$ represents a hydrogen atom, an alkyl group or an alkenyl group, and is preferably a $C_{1-6}$ alkyl group or a

$C_{1-6}$ alkenyl group.

$R^{14}$ represents an alkyl group, and is preferably a $C_{1-3}$ alkyl group, more preferably a methyl group.

$R^{15}$ represents an alkyl group, and is preferably a linear alkyl group or a cyclic alkyl group.

$R^{16}$ represents a nitrile group.

The non-fluorinated monomer may, for example, be methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, or cyclohexyl vinyl ether.

As the non-fluorinated monomer, one type may be used alone, or two or more types may be used in combination.

As the non-fluorinated monomer, a monomer represented by the formula (1-1) or a monomer represented by the formula (1-2), is preferred, and a monomer represented by the formula (1-1) wherein $R^{13}$ is an alkyl group, is more preferred. The monomer represented by the formula (1-1) and the monomer represented by the formula (1-2) have an ester group or a carboxy group, being a water-affinity group, whereby such a monomer or its polymer has a water affinity. Therefore, it is considered that such a monomer or its polymer is stably dispersed in an aqueous medium without requiring a surfactant, especially at a low concentration.

(Specific polymer)

The specific polymer is a polymer containing units based on a non-fluorinated monomer.

Although the specific polymer usually contains only units based on a non-fluorinated monomer, it may contain units based on a fluorinated monomer to such an extent that the effect of the invention is not impaired. That is, a fluorinated monomer may be used in step A1 in addition to a non-fluorinated monomer. A fluorinated monomer is a monomer having fluorine atoms, and, for example, TFE may be mentioned.

The content of units based on a non-fluorinated monomer in the specific polymer is preferably at least 90 mass%, more preferably at least 95 mass% to the total units of the specific polymer. The upper limit may be 100 mass%.

(Aqueous medium)

The aqueous medium may, for example, be water, or a mixture of water and a water-soluble organic solvent.

The water-soluble organic solvent may, for example, be tert-butanol, propylene glycol or dipropylene glycol. In the case of a mixture of water and a water-soluble organic solvent, the water-soluble organic solvent concentration is preferably at most 10 mass%.

The aqueous medium is preferably water alone.

(Polymerization Initiator)

In step A1, a polymerization initiator may be used. That is, a polymerization initiator may be used at the time of the polymerization of the non-fluorinated monomer.

As the polymerization initiator, a water-soluble radical initiator or a water-soluble redox catalyst is preferred.

As the water-soluble radical initiator, a persulfate such as ammonium persulfate or potassium persulfate, a water-soluble organic peroxide such as disuccinic acid peroxide, bisglutaric acid peroxide or tert-butyl hydroperoxide, is preferred.

As the water-soluble redox catalyst, preferred is a combination of an oxidizing agent such as bromic acid or a salt thereof, chloric acid or a salt thereof, persulfuric acid or a salt thereof, permanganic acid or a salt thereof, or hydrogen peroxide, and a reducing agent such as sulfurous acid or a salt thereof, hydrogen sulfite or a salt thereof, thiosulfuric acid or a salt thereof, or an organic acid. Among them, a combination of bromic acid or a salt thereof and sulfurous acid or a salt thereof (e.g. ammonium sulfite), and a combination of permanganic acid or a salt thereof (e.g. potassium permanganate) and oxalic acid, are more preferred.

As the polymerization initiator, ammonium persulfate alone or a mixed system of a persulfate and disuccinic acid peroxide is preferred, and ammonium persulfate alone or a mixed system of ammonium persulfate and disuccinic acid peroxide is more preferred.

As the polymerization initiator, one type may be used alone, or two or more types may be used in combination.

As a method for charging the polymerization initiator, the entire amount thereof may be charged into the reaction system before starting the polymerization reaction, or it may be continuously or intermittently added to the reaction system.

(Procedure of step A1)

In step A1, polymerization of the non-fluorinated monomer is conducted in an aqueous medium. Specifically, it is preferred that the non-fluorinated monomer and the aqueous medium are mixed, and polymerization of the non-fluorinated monomer is conducted in the obtained mixed liquid.

As mentioned above, a fluorinated monomer may be used in combination, as the case requires.

The amount of the non-fluorinated monomer to be used is at most 200 ppm, preferably from 1 to 150 mass ppm, more preferably from 5 to 100 mass ppm, further preferably from 5 to 50 mass ppm, to the amount of TFE to be supplied to the polymerization system (the amount of TFE to be used), which is used in step A2 as described later.

Here, as the method for charging the non-fluorinated monomer, the initial batch addition is preferred, in which its entire amount is charged to the polymerization system before starting the polymerization reaction.

The content of the non-fluorinated monomer in the dispersion obtainable by mixing the non-fluorinated monomer and the aqueous medium, is preferably from 0.000015 to 0.0030 mass%, more preferably from 0.000075 to 0.0023 mass%, to the entire mass of the dispersion.

Since the non-fluorinated monomer usually polymerizes in its entire amount to form the specific polymer, the concentration of the specific polymer in the obtained solution 1 will be in the above numerical range.

The above non-fluorinated monomer concentration and specific polymer concentration are the concentrations in a case where the obtained solution 1 is used in step A2 without being diluted with an aqueous medium. In a case where the obtained solution 1 is diluted with an aqueous medium to the above specific polymer concentration and the diluted solution is to be used in step A2, a solution with a high concentration corresponding to the dilution factor is produced in step A1. The dilution factor is not particularly limited, but at most 10 times is preferred.

The amount of the polymerization initiator to be used is preferably from 0.2 to 1,000 mass%, more preferably from 0.2 to 500 mass%., to the entire amount of the non-fluorinated monomer.

The amount of the polymerization initiator to be used is preferably from 0.1 to 1,000 mol%, more preferably from 0.1 to 300 mol%, to the entire amount of the non-fluorinated monomer.

The polymerization temperature of the non-fluorinated monomer is preferably from 10 to 95°C, more preferably from 50 to 90°C. The polymerization time is preferably from 5 to 400 minutes, more preferably from 5 to 300 minutes, further preferably from 5 to 200 minutes.

The pressure condition during the polymerization is preferably a reduced pressure condition or a normal pressure condition. Particularly, from 0 to 2.0 MPa is preferred, from 0 to 1.0 MPa is more preferred, and from 0 to 0.5 MPa is further preferred.

Otherwise, the polymerization may also be carried out by making the atmosphere during the polymerization to be a TFE atmosphere. Normally, polymerization of the non-fluorinated monomer in an aqueous medium proceeds preferentially to polymerization of TFE.

By the above step A1, a solution 1 containing the specific polymer is obtainable.

The specific polymer may be dissolved in the solution 1 or dispersed in the aqueous medium in particulate form. It is considered that although the specific polymer is not an emulsifier during the polymerization of TFE in step A2 as described later, due to the balance of interfacial tension for both the aqueous medium and the PTFE particles, the specific polymer exists at the boundary between the two and thus contributes to stabilizing the dispersion of PTFE particles in the aqueous medium.

The particle size of the particles of the specific polymer is preferably from 0.1 to 100 nm, more preferably from 0.1 to 50 nm.

Further, in the solution 1 obtainable in step A1, an unreacted non-fluorinated monomer may be contained. The atmosphere in the polymerization system of step A1 may be conducted under a TFE-containing atmosphere in consideration of step A2. In such a case, it is considered that a part of the specific polymer in step A2 may become a polymer containing TFE units.

From another point of view, it can also be considered that the PTFE particles obtainable in step A2 are not limited to particles consisting of a physical mixture of the specific polymer and PTFE, but may also be particles containing a TFE copolymer having units based on the non-fluorinated monomer.

<Step A2>

Step A2 is a step of conducting the polymerization of TFE in the solution 1 obtained in step A1 without substantially adding a surfactant to the solution 1, to obtain an aqueous emulsion containing PTFE particles.

In the following, first, materials to be used in step A2 will be described in detail, and then, the procedure of step A2 will be described in detail.

(TFE)

In step A2, TFE is used.

(Another monomer)

In step A2, another monomer other than TFE may be further used to such an extent that the effect of the invention is not impaired.

As another monomer, a monomer having a polar group (hereinafter simply referred to as a "specific monomer") may be mentioned. Since the polar group in the specific monomer interacts with the aqueous medium, it is assumed that it is located between TFE and the aqueous medium at the time of polymerization of TFE and exhibits a surfactant-like function. As a result, the polymerization of TFE proceeds well, and occurrence of chain transfer will be suppressed.

The polar group contained in the specific monomer may, for example, be a sulfonic acid group, a sulfonate group, a carboxylic acid group, a carboxylate group, a phosphonic acid group, or a phosphonate group. Among them, the group represented by the formula (A) or the group represented by the formula (B) is preferred, and the group represented by the formula (A) is more preferred, in that formation of the fluorinated oligomers will be further suppressed.

Formula (A):        $-SO_3M$

Formula (B):        $-COOM$

In the formula (A) and the formula (B), M represents a hydrogen atom, $NH_4$ or an alkali metal atom. The alkali metal atom may, for example, be a lithium atom, a sodium atom or a potassium atom.

The specific monomer usually has a polymerizable group, and the number of polymerizable groups is preferably from 1 to 3, more preferably 1.

The polymerizable group is preferably an ethylenically unsaturated group. More specifically, an acryloyl group, a methacryloyl group, a vinyl ether group, a vinyl ester group, a vinyl group, or an allyl group may be mentioned, and an acryloyl group, a methacryloyl group, a vinyl ester group, or a vinyl ether group is preferred.

As the specific monomer, the monomer represented by the formula (3) is preferred because formation of the fluorinated oligomers will be further suppressed.

Formula (3):        $CR^{31}R^{32}=CR^{33}-L^3-R^{34}$

In the formula (3), $R^{31}$ and $R^{32}$ are each independently a hydrogen atom or a fluorine atom.

$R^{33}$ represents a hydrogen atom, a fluorine atom, or an alkyl group which may be substituted by a fluorine atom. Among them, a hydrogen atom or a fluorine atom is preferred, whereby copolymerizability with TFE will be better.

Here, the "alkyl group which may be substituted by a fluorine atom" means an alkyl group which may have at least one hydrogen atom in the alkyl group substituted by a fluorine atom.

The number of carbon atoms in the alkyl group which may be substituted by a fluorine atom is preferably from 1 to 3, more preferably 1.

$L^3$ represents a single bond or a divalent linking group. Of these, a single bond is preferred, whereby copolymerizability with TFE will be better. The divalent linking group may, for example, be a divalent hydrocarbon group (which may be a divalent saturated hydrocarbon group, a divalent aromatic hydrocarbon group, an alkenylene group, or an alkynylene group; the divalent saturated hydrocarbon group may be linear, branched or cyclic, and for example, an alkylene group may be mentioned; the number of carbon atoms is preferably from 1 to 20; and the divalent aromatic hydrocarbon group preferably has from 5 to 20 carbon atoms, for example, a phenylene group may be mentioned; other than these, it may be a $C_{2-20}$ alkenylene group or a $C_{2-20}$ alkynylene group), a divalent heterocyclic group, -O-, -S-, $-SO_2-$, -C(O)-, $-Si(R^a)_2-$, $-N(R^b)-$, and a group in which two or more of these are combined. Here, $R^a$ represents an alkyl group (preferably having from 1 to 10 carbon atoms) or a phenyl group. $R^b$ represents a hydrogen atom or an alkyl group (preferably having from 1 to 10 carbon atoms).

The above-mentioned group in which two or more of these are combined, may, for example, be -OC(O)-, $-C(O)N(R^b)-$, an alkylene group-O-alkylene group, an alkylene group-OC(O)-alkylene group, or an alkylene group-$Si(R^a)_2$-phenylene group-$Si(R^a)_2$.

Further, the above divalent hydrocarbon group may have a substituent. The substituent may, for example, be a halogen atom (e.g. a fluorine atom or a chlorine atom). That is, a hydrogen atom in the above divalent hydrocarbon group may be substituted by a halogen atom.

$R^{34}$ represents a group represented by the above formula (A) or a group represented by the above formula (B).

As the monomer represented by the formula (3), at least one monomer selected from the group consisting of a monomer represented by the formula (3-1), a monomer represented by the formula (3-2), a monomer represented by the formula (3-3), a monomer represented by the formula (3-4), the monomer represented by the formula (3-5) and the monomer represented by the formula (3-6), is preferred, and a monomer represented by the formula (3-1) is more preferred.

Formula (3-1): $CR^{31}R^{32}=CR^{33}-R^{34}$

Formula (3-2): $CR^{31}R^{32}=CR^{33}-(CF_2)_{m1}-R^{34}$

Formula (3-3): $CR^{31}R^{32}=CR^{33}-(CF_2C(CF_3)F)_{m2}-R^{34}$

Formula (3-4): $CR^{31}R^{32}=CR^{33}-O-(CFR^{35})_{m3}-R^{34}$

Formula (3-5): $CR^{31}R^{32}=CR^{33}-O-(CF_2CFR^{35}O)_{m4}-CF_2CF_2-R^{34}$

Formula (3-6): $CR^{31}R^{32}=CR^{33}-CF_2-O-(CF(CF_3)CF_2O)_{m5}-CF(CF_3)-R^{34}$

In the formulas (3-1) to (3-6), the definitions of $R^{31}$ to $R^{34}$ are as described above.

In the formula (3-2), m1 represents an integer of from 1 to 10.

In the formula (3-3), m2 represents an integer of from 1 to 5.

In the formula (3-4), m3 represents an integer of from 1 to 10. $R^{35}$ represents a fluorine atom or $CF_3$.

In the formula (3-5), m4 represents an integer of from 1 to 10. The definition of $R^{35}$ is as described above.

In the formula (3-6), m5 represents 0 or an integer of from 1 to 10.

A specific example of the specific monomer may be ammonium vinyl sulfonate.

As the specific monomer, one type may be used alone, or two or more types may be used in combination.

(Polymerization Initiator)

In step A2, a polymerization initiator may be used. That is, a polymerization initiator may be used at the time of the polymerization of TFE.

As the polymerization initiator to be used, the polymerization initiator as described in step A1 may be mentioned.

As the polymerization initiator, a mixed system of a persulfate and disuccinic acid peroxide is preferred, and a mixed system of ammonium persulfate and disuccinic acid peroxide is more preferred.

The amount of the polymerization initiator to be used, is preferably at least 0.10 mass%, more preferably from 0.10 to 1.5 mass%, further preferably from 0.20 to 1.0 mass%, to the entire amount of TFE to be supplied to the polymerization system.

(Stabilizing aid)

In step A2, a stabilizing aid may be used.

As the stabilizing aid, paraffin wax, a fluorinated solvent or silicone oil is preferred, and paraffin wax is more preferred. The paraffin wax may be liquid, semi-solid or solid at room temperature. Of these, a saturated hydrocarbon having 12 or more carbon atoms is preferred. The melting point of paraffin wax is preferably from 40 to 65°C, more preferably from 50 to 65°C.

As the stabilizing aid, one type may be used alone, or two or more types may be used in combination.

(Others)

In addition, monomers other than TFE and the specified monomer may be used in step A2 to such an extent that the effect of the invention is not impaired, but from the viewpoint of the superiority of various properties of PTFE, it is preferred that the amount of TFE used is at least 99.5 mass%, more preferably at least 99.8 mass%.

(Procedure of step A2)

In step A2, substantially no surfactant is added to the solution 1. That is, in step A2, the polymerization of TFE is carried out in the solution 1 without adding any surfactant anew to the solution 1.

A surfactant is a compound that has a hydrophilic group (e.g. a polar group) and a hydrophobic group (e.g. a hydrocarbon group). The definition of the polar group is the same as the definition of the polar group in the specific monomer.

As the surfactant, a known surfactant may be mentioned, and a non-ionic surfactant and an ionic surfactant may be mentioned, and, more specifically, a hydrocarbon-containing surfactant and a fluorinated surfactant may be mentioned. The definition of the hydrocarbon-containing surfactant is as described later.

In step A2, it is preferred that at least one type selected from the group consisting of hydrocarbon-containing surfactants and fluorinated surfactants is substantially not added to the solution 1.

The above "substantially not added" means that no surfactant is added or, even if a surfactant is added, the amount of the surfactant to be added is at most 200 mass ppm to the entire mass of the solution 1. Although there is no restriction on the lower limit, 0 mass ppm is preferred. That is, it is preferred that no surfactant is added to the solution 1 in step A2.

TFE is fed into the polymerization system (i.e. the polymerization reaction vessel) in the usual manner. For example, TFE is fed into the polymerization system continuously or intermittently so that the polymerization pressure becomes to be a predetermined pressure.

In a case where a polymerization initiator is used, the polymerization initiator may be added to the polymerization system in bulk or in divided steps.

In the case of using a specific monomer, the amount of the specific monomer to be used to the entire amount of TFE is preferably at most 0.150 mass%. That is, the amount of the specific monomer to be charged to the entire amount of TFE to be charged is preferably at most 0.150 mass%.

From the viewpoint of the stability of the emulsion during the polymerization, the amount of the specific monomer to be used to the entire amount of TFE is preferably at most 0.100 mass%, more preferably at most 0.090 mass%. From the viewpoint of improving the molecular weight, the amount of the specific monomer to be used to the entire amount of TFE is preferably at least 0.005 mass%, more preferably at least 0.010 mass%.

Further, in a case where two or more specific monomers are to be used, the total amount of the specific monomers to be used, may be within the above ranges.

In the case of using a specific monomer, the amount of the specific monomer to be used to the entire amount of TFE is preferably at most 0.150 mol%. That is, the amount of the specific monomer to be charged to the entire amount of TFE to be charged, is preferably at most 0.150 mol%.

From the viewpoint of stability of the emulsion during the polymerization, the amount of the specific monomer to be used to the entire amount of TFE is at most 0.100 mol%, more preferably at most 0.090 mol%. Further, from the viewpoint of improving the molecular weight, the amount of the specific monomer to be used to the entire amount of TFE is, preferably at least 0.001 mol%, more preferably at least 0.005 mol%.

Further, in a case of using two or more specific monomers, the total amount of the specific monomers to be used may be within the above ranges.

The polymerization temperature is preferably from 10 to 95°C, more preferably from 15 to 90°C. The polymerization pressure is preferably from 0.5 to 4.0 MPa, more preferably from 0.6 to 3.5 MPa. The polymerization time is preferably from 50 to 520 minutes, more preferably from 50 to 450 minutes, further preferably from 50 to 300 minutes.

Further, steps A1 and A2 may be continuously conducted in the same polymerization reaction container.

Further, in the production method of the present invention, the specific polymer may be formed in step A1, and step A2 may be conducted before the non-fluorinated monomer is completely consumed in step A1.

By the above procedure, an aqueous emulsion (aqueous emulsion containing PTFE particles) in which PTFE is dispersed in the form of particles, is obtainable. The concentration of PTFE particles in the aqueous emulsion is preferably from 10 to 45 mass%, more preferably from 10 to 30 mass%, further preferably from 10 to 25 mass%, to the entire amount of the aqueous emulsion. Within the above range, PTFE particles in the aqueous emulsion can be more easily coagulated, and the cloudiness of the coagulated liquid can be suppressed.

The average primary particle size of PTFE particles is preferably from 100 to 500 nm, more preferably from 150 to 300 nm.

The average primary particle size of PTFE particles corresponds to D50 measured by a laser scattering particle size distribution analyzer.

PTFE in the PTFE particles obtainable by the above procedure usually contains TFE units as the main component. The main component is meant that the content of TFE units is at least 99.700 mass%, preferably at least 99.900 mass%, to all units of PTFE. As the upper limit, 100 mass% may be mentioned.

In a case where PTFE contains units based on the specific monomer, the content of the units based on the specific monomer is preferably from 0.005 to 0.150 mass%, more preferably from 0.010 to 0.100 mass%, to all units of PTFE.

Further, in a case where two or more specific monomers are to be used, the total content of units based on the respective specific monomers may be within the above ranges.

In a case where PTFE contains units based on a non-fluorinated monomer, the content of the units based on the non-fluorinated monomer is preferably at most 200 mass ppm, more preferably from 1 to 150 mass ppm, further preferably from 5 to 100 mass ppm, particularly preferably from 5 to 50 mass ppm, to all units of PTFE.

Further, in a case where two or more non-fluorinated monomers are to be used, the total content of units based on the respective non-fluorinated monomers may be within the above ranges.

<Step A3>

Step A3 is a step of adding a nonionic surfactant to the aqueous emulsion obtained in step A2, and then, concentrating the aqueous emulsion, to obtain an aqueous dispersion of PTFE. That is, it is a step of adding a nonionic surfactant to the PTFE low-concentration aqueous dispersion obtained in step A2 (corresponding to the above aqueous emulsion), and then, concentrating the PTFE low-concentration aqueous dispersion to obtain the PTFE high-concentration aqueous dispersion (corresponding to the above aqueous dispersion of PTFE). By carrying out step A3, an aqueous dispersion of PTFE showing a higher PTFE particle concentration than that of the aqueous dispersion can be obtained.

In the following, first, materials to be used in step A3 will be described in detail, and then, the procedure of step A3 will be described in detail.

(Nonionic surfactant)

As the nonionic surfactant, a nonionic surface active agent may be mentioned.

Further, as the nonionic surfactant, a nonionic surfactant represented by the formula (4) or a nonionic surfactant represented by the formula (5) is preferred.

Formula (4): $R^{41}$-O-A-H

Formula (5): $R^{51}$-$C_6H_4$-O-B-H

In the formula, $R^{41}$ represents a $C_{8-18}$ alkyl group. A represents a polyoxyalkylene chain consisting of from 5 to 20 oxyethylene groups and from 0 to 2 oxypropylene groups.

In the formula, $R^{51}$ represents a $C_{4-12}$ alkyl group. B represents a polyoxyethylene chain consisting of from 5 to 20 oxyethylene groups.

Further, as the nonionic surfactant, a nonionic surfactant represented by the formula (6) is also preferred.

Formula (6): $R^{61}$-O-D-H

In the formula, $R^{61}$ represents a $C_{8-18}$ alkyl group. D represents a polyoxyalkylene chain consisting of from 5 to 20 oxyethylene groups and from 0.1 to 3 oxybutylene groups.

In the formula (4), the number of carbon atoms in the alkyl group represented by $R^{41}$ is from 8 to 18, preferably from 10 to 16, more preferably from 12 to 16. When the number of carbon atoms is at most 18, PTFE particles are less likely to settle even when the aqueous dispersion of PTFE is left for a long period of time, and the storage stability will be excellent. Further, when the number of carbon atoms is at least 8, the surface tension of the aqueous dispersion of PTFE becomes low, whereby the permeability and wettability will be excellent.

In the formula (4), as A being a hydrophilic group, preferred is a polyoxyalkylene chain consisting of from 7 to 12 oxyethylene groups and from 0 to 2 oxypropylene groups. In particular, a case where the number of oxypropylene groups in A is from 0.5 to 1.5, is preferred, because the defoaming property will be good.

In the formula (5), the number of carbon atoms in the alkyl group represented by $R^{51}$ is from 4 to 12, preferably from 6 to 10, more preferably from 8 to 9. When the number of carbon atoms in the alkyl group is at least 4, the surface tension of the aqueous dispersion of PTFE becomes low, whereby the permeability and wettability will be excellent. When the number of carbon atoms is at most 12, the PTFE particles are less likely to settle even when the aqueous dispersion of PTFE is left for a long time, and the storage stability will be excellent.

In the formula (5), the number of oxyethylene groups in B being a hydrophilic group, is preferably from 6 to 16, more preferably from 7 to 12.

In the formula (6), the number of carbon atoms in the alkyl group represented by $R^{61}$ is from 8 to 18, preferably from 10 to 16, more preferably from 12 to 16. When the number of carbon atoms is at most 18, the PTFE particles are less likely to settle even when the aqueous dispersion of PTFE is left for a long period of time, and the storage stability will be excellent.. Further, when the number of carbon atoms is at least 8, the surface tension of the aqueous dispersion of PTFE becomes low, whereby the permeability and wettability will be excellent.

In the formula (6), as D being a hydrophilic group, a polyoxyalkylene chain having from 7 to 12 oxyethylene groups and from 0.1 to 3 oxybutylene groups, is preferred. In particular, a case where the number of oxybutylene groups in D is from 0.5 to 2, is preferred, because the defoaming property will be good. Further, the number of oxybutylene groups is more preferably from 0.7 to 1.7, further preferably from 0.9 to 1.5. The number of oxyethylene groups is preferably from 6 to 15, more preferably from 7 to 12.

The average molecular weight of the nonionic surfactant represented by the formula (4), the average molecular weight of the nonionic surfactant represented by the formula (5), and the average molecular weight of the nonionic surfactant represented by the formula (6) are, respectively, preferably from 450 to 800, more preferably from 500 to 750, further preferably from 550 to 700.

As the nonionic surfactant represented by the formula (4), for example, $C_{13}H_{27}$-$(OC_2H_4)_{10}$-OH, $C_{12}H_{25}$-$(OC_2H_4)_{10}$-OH, $C_{10}H_{21}CH(CH_3)CH_2$-$(OC_2H_4)_9$-OH, $C_{13}H_{27}$-$(OC_2H_4)_9$-OCH(CH_3)CH_2-OH, $C_{16}H_{33}$-$(OC_2H_4)_{10}$-OH, or $HC(C_5H_{11})(C_7H_{15})$-$(OC_2H_4)_9$-OH may be mentioned. As commercially available products, Turditol (registered trademark) 15S series, manufactured by Dow Chemical, or Lionol (registered trademark) TD series, manufactured by Lion Corporation, may be mentioned.

As the nonionic surfactant represented by the formula (5), for example, $C_8H_{17}$-$C_6H_4$-$(OC_2H_4)_{10}$-OH, or $C_9H_{19}$-$C_6H_4$-$(OC_2H_4)_{10}$-OH may be mentioned. As commercially available products, Triton (registered trademark) X series manufactured by Dow Chemical, or Nikkol (registered trademark) OP series or NP series manufactured by Nikko Chemicals Co., Ltd may be mentioned.

As the nonionic surfactant represented by the formula (6), for example, $C_{13}H_{27}OCH_2CH(C_2H_5)O(C_2H_4O)_8H$, $C_{10}H_{21}CH(CH_3)CH_2OCH_2CH(C_2H_5)O(C_2H_4O)_8H$, $C_{12}H_{25}OCH_2CH(C_2H_5)O(C_2H_4O)_8H$, $C_8H_{17}OCH_2CH(C_2H_5)O(C_2H_4O)_{10}H$, $C_{13}H_{27}OCH_2CH_2OCH_2CH(C_2H_5)O(C_2H_4O)_8H$, $C_{10}H_{21}CH(CH_3)CH_2O(C_2H_4O)_9CH_2CH(C_2H_5)OH$, $C_{16}H_{33}OC_2H_4OCH(C_2H_5)CH_2O(C_2H_4O)_9H$, $C_{12}H_{25}OCH_2CH(C_2H_5)O(C_2H_4O)_8CH_2CH(C_2H_5)OH$, $C_{13}H_{27}OCH(CH_3)CH(CH_3)O(C_2H_4O)_8H$, $C_{12}H_{25}OCH(CH_3)CH(CH_3)O(C_2H_4O)_8H$, $C_{13}H_{27}O(CH_2)_4O(C_2H_4O)_8H$, or $C_{12}H_{25}O(CH_2)_2CH(CH_3)O(C_2H_4O)_8H$ may be mentioned.

Of the nonionic surfactant represented by the formula (4) and/or the nonionic surfactant represented by the formula (5), one type may be used alone, or two or more types may be used in combination.

Of the nonionic surfactant represented by the formula (6), one type may be used alone, or two or more types may be used in combination.

Furthermore, the nonionic surfactant represented by the formula (6) may be used as mixed with the nonionic surfactant represented by the formula (4) or the formula (5). Further, the nonionic surfactant is a mixture of several substances with different molecular structures, and the number of carbon atoms in alkyl groups in the nonionic surfactant and the number of oxyethylene, oxypropylene and oxybutylene groups in the polyoxyalkylene chain shall be treated as average values. The respective numerical values are not limited to integers.

(Procedure of step A3)

The method for concentrating the aqueous emulsion is not particularly limited, and a conventional known method may be employed. As the concentration method, a centrifugal sedimentation method, an electrophoretic method, or a phase separation method, as described on page 32 of the Fluoropolymer Handbook (edited by Takaomi Satokawa, published by Nikkan Kogyo Shimbun, Ltd.) may be mentioned.

The electrophoretic method is a method that utilizes the negatively charged nature of PTFE particles. Specifically, in the aqueous emulsion, from 1 to 10 mass% (preferably from 2 to 8 mass%) of a nonionic surfactant is dissolved to the mass of the PTFE. Then, to the obtained aqueous emulsion, a voltage of from 50 to 500 V/m (preferably from 100 to 300 V/m) is applied in a vessel having a semipermeable membrane such as a cellulose membrane, whereby PTFE particles will be electrophoresed, collected on the semi-permeable membrane surface and then settle at the bottom due to the difference in specific gravity, whereupon an aqueous dispersion of PTFE will be recovered. The pH of the aqueous emulsion before the concentration is preferably from 2 to 10, more preferably from 3 to 9.

The phase-separation method is a method in which by heating, followed by being left for a certain period of time, PTFE particles are settled. Specifically, in the aqueous emulsion, from 8 to 20 mass% (preferably from 12 to 18 mass%) of a nonionic surfactant relative to the mass of PTFE is dissolved. Then, the obtained aqueous emulsion is heated at from 50 to 100°C (preferably from 60 to 90°C) and left to stand for from 1 to 100 hours (preferably from 5 to 20 hours) to recover the aqueous dispersion of PTFE accumulated at the bottom due to the specific gravity difference.

Further, at the time of concentration, an anionic surfactant (such as ammonium laurate, triethanolamine laurate, sodium lauryl sulfate, ammonium lauryl sulfate, or triethanolamine lauryl sulfate) may be added to the aqueous emulsion of PTFE in an amount of at most 0.20 mass% to the mass of PTFE, to speed up the concentration. Such an additive not only speeds up the concentration of the aqueous emulsion of PTFE, but also has an effect of improving the viscosity or dispersion stability.

Further, after the nonionic surfactant is added to the aqueous emulsion obtained in step A2, and before the aqueous emulsion is concentrated, the polymerization initiator residue, etc. may be adsorbed and removed by an ion exchange resin or the like. Excess water-soluble ionic compounds will thereby be removed, whereby the coating performance of the aqueous dispersion of PTFE will be improved, and its application to an insulating material will be easy.

The concentration of PTFE particles in the aqueous dispersion of PTFE obtainable by the above procedure is preferably from 15 to 70 mass%, more preferably from 20 to 70 mass%. The aqueous dispersion of PTFE in which the concentration of PTFE particles is from 15 to 70 mass%, can be used preferably for an application to impregnate the aqueous dispersion of PTFE to woven fabrics or strings of glass fibers, an application to mix it with an inorganic powder or plastic powder, or an application to add it in a small amount to a paint.

Further, especially in an application for coating the aqueous dispersion of PTFE or in an application for processing of PTFE fibers, the concentration of PTFE particles is preferably from 50 to 70 mass%, more preferably from 52 to 68 mass%.

The pH of the aqueous dispersion of PTFE is preferably from 2 to 13, more preferably from 3 to 11.

PTFE constituting PTFE particles in the aqueous dispersion of PTFE is not only composed of monopolized products of TFE but also includes so-called modified PTFE containing polymerization units based on copolymerization components that can be copolymerized with TFE, such as halogenated ethylene such as chlororifluoroethylene, halogenated propylene such as hexafluoropropylene, and a fluorovinyl ether such as a perfluoro(alkyl vinyl ether), in very small amounts at a level not substantially melt processable.

The content of the nonionic surfactant in the aqueous dispersion of PTFE is preferably from 1 to 20 mass%, more preferably from 1.5 to 15 mass%, further preferably from 2 to 10 mass%, to the mass PTFE.

When the above content is at least 1 mass%, the mechanical stability of the aqueous dispersion of PTFE will be excellent, and the wettability will also be excellent. Further, when the above content is at most 20 mass%, the coated film will be less likely to crack, and the durability of the PTFE product will be excellent.

In particular, in order to improve the wettability at the time of coating and to prevent cracking, the content of the nonionic surfactant in the aqueous dispersion of PTFE is particularly preferably from 3 to 10 mass%.

The surface tension of the aqueous dispersion of PTFE is preferably from 24 to 35 mN/m, more preferably from 25 to 32 mN/m. When the surface tension is at least 24 mN/m, the defoaming property will be excellent, and when the surface tension is at most 35 mN/m, blistering will be less likely to occur.

The aqueous dispersion of PTFE may contain one or more of non-fluorinated emulsifiers, various leveling agents, preservatives, colorants, fillers, organic solvents, ammonia water, and other known components.

Further, when the aqueous dispersion of PTFE contains a polyethylene oxide or polyurethane-type viscosity modifier, the mechanical stability of the aqueous dispersion of PTFE will be excellent.

For ease of application, the viscosity of the aqueous dispersion of PTFE is preferably at most 300 mPa·s, more preferably from 3 to 100 mPa·s, further preferably from 5 to 50 mPa·s, at 23°C.

The thickening temperature of the aqueous dispersion of PTFE is preferably from 30 to 60°C, more preferably from 35 to 55°C, further preferably from 40 to 50°C. When the thickening temperature is within the above range, a viscosity change due to a change in the coating temperature will be less likely to occur, and blistering will be less likely to occur.

<<Second embodiment>>

As the second embodiment for the method for producing an aqueous dispersion of PTFE, an embodiment having the following three steps may be mentioned.

Step B1: A step of mixing at least one nucleation additive selected from the group consisting of polyalkylene oxide compounds and hydrocarbon-containing surfactants, and an oxidizing agent in an aqueous medium to obtain a solution 2.

Step B2: A step of conducting polymerization of TFE in the solution 2 obtained in step B1 without adding a surfactant to the solution 2, to obtain an aqueous emulsion containing PTFE particles.

Step B3: A step of adding a nonionic surfactant to the aqueous emulsion, followed by concentration of the aqueous emulsion to obtain an aqueous dispersion of PTFE.

Further, in the second method, the amount of the nucleation additive to be used to the amount of TFE supplied to the polymerization system is at most 100 mass ppm.

In the following, the present invention will be described in detail by using the above preferred embodiment as an example.

<Step B1>

Step B1 is a step of mixing at least one nucleation additive selected from the group consisting of polyalkylene oxide compounds and hydrocarbon-containing surfactants, and an oxidizing agent in an aqueous medium, to obtain a solution 2.

In the following, first, materials to be used in step B1 will be described in detail, and then, the procedure of step B1 will be described in detail.

(Polyalkylene oxide compound)

The polyalkylene oxide compound is a compound for forming nuclei (seeds) at the time of the polymerization of TFE. That is, it corresponds to a nucleation additive.

The polyalkylene oxide compound is a compound containing a polyalkylene oxide chain, and the polyalkylene oxide chain may, for example, be a polymethylene oxide chain, a polyethylene oxide chain, a polypropylene oxide chain, or a polytetramethylene oxide chain.

The polyalkylene oxide compound preferably has a surface tension in water of greater than about 40 dynes/cm at a concentration of 1,000 ppm. The surface tension is more preferably greater than about 42 dynes/cm, further preferably greater than about 45 dynes/cm. The above surface tension is preferably at most about 73 dynes/cm.

The number average molecular weight of the polyalkylene oxide compound is preferably from 50 to 2,000, more preferably from 100 to 1,500, further preferably from 150 to 1,300.

From such a viewpoint that formation of fluorinated oligomers is more suppressed, as the polyalkylene oxide compound, a compound represented by the formula (2) is preferred.

Formula (2):        $R^{21}$-(O-$L^2$)$_n$-O-$R^{22}$

In the formula (2), $R^{21}$ and $R^{22}$ are each independently a hydrogen atom, an alkyl group, an acryloyl group, or a methacryloyl group.

$L^2$ represents a $C_{1-4}$ alkylene group and may be linear or branched.

n represents from 1 to 50.

The polyalkylene oxide compound may, for example, be polyethylene glycol, polyethylene glycol acrylate, polyethylene glycol methacrylate, polyethylene glycol methyl ether, polyethylene glycol dimethyl ether, polyethylene glycol butyl ether, polypropylene glycol, polypropylene glycol acrylate, polypropylene glycol methacrylate, polypropylene glycol dimethacrylate, polypropylene glycol methyl ether, polypropylene glycol dimethyl ether, polypropylene glycol butyl ether, polypropylene glycol dimethacrylate, or polytetramethylene glycol.

As the polyalkylene oxide compound, one type may be used alone, or two or more types may be used in combination.

(Hydrocarbon-containing surfactant)

The hydrocarbon-containing surfactant is a surfactant containing a hydrocarbon. More specifically, at least some of monovalent substituents on carbon atoms are hydrogen atoms, and substitution by halogen atoms such as fluorine and chlorine atoms is also possible. In a preferred hydrocarbon-containing surfactant, at least 75%, preferably at least 85%, more preferably at least 95%, of monovalent substituents substituted on carbon atoms are hydrogen atoms.

As the hydrocarbon-containing surfactant, for example, a hydrocarbon surfactant and a siloxane surfactant may be mentioned.

The hydrocarbon surfactant means a surfactant which does not contain a silicon atom and does not contain a halogen atom such as a chlorine atom or a fluorine atom, since 100% of monovalent substituents substituted on carbon atoms are a hydrogen atom.

The siloxane surfactant means a hydrocarbon-containing surfactant having hydrophobic groups including a siloxane skeleton containing a large number of siloxane units.

As the hydrocarbon surfactant, an anionic hydrocarbon surfactant is preferred. An anionic hydrocarbon surfactant means a hydrocarbon surfactant having negatively charged hydrophilic moieties such as carboxylic acid groups, sulfonic acid groups, sulfuric acid groups, phosphonic acid groups and phosphoric acid groups, and hydrocarbon moieties such as alkyl groups as hydrophobic moieties.

An example of the anionic hydrocarbon surfactant may be a highly branched C10 tertiary carboxylic acid supplied as Versatic (registered trademark) 10 by Resolution Performance Products.

Other examples of the anionic hydrocarbon surfactant may be sodium linear alkyl polyether sulfonates supplied as Avanel (registered trademark) S series by BASF.

As the anionic hydrocarbon surfactant, an anionic hydrocarbon surfactant represented by the formula (7) is also preferred.

Formula (7):        $R^{71}$-$L^7$-M

$R^{71}$ represents an alkyl group. The alkyl group may be linear, branched or cyclic, and is preferably linear. The number of carbon atoms in the alkyl group is, for example, from 6 to 20.

$L^7$ represents -ArSO$_3^-$, -SO$_3^-$, -SO$_4^-$, -PO$_3^-$, -PO$_4^-$ or -COO$^-$. Here, Ar represents an arylene group.

M represents a monovalent cation. The monovalent cation may, for example, be $H^+$, $Na^+$, $K^+$ or $NH_4^+$.

As the anionic hydrocarbon surfactant represented by the formula (7), for example, sodium dodecyl sulfate may be mentioned.

As another example of the anionic hydrocarbon surfactant, sulfosuccinate surfactant Lankropol (registered trademark) K8300 available from Akzo Nobel Surface Chemistry LLC. may be mentioned.

As the hydrocarbon surfactant, a nonionic hydrocarbon surfactant is also preferred. The nonionic hydrocarbon surfactant has no charged groups, but has a hydrophobic portion, which is often a long chain hydrocarbon. The hydrophilic portion of the nonionic hydrocarbon surfactant may be a water-soluble functional group such as a polyethylene oxide chain obtainable from the polymerization of ethylene oxide.

As the nonionic hydrocarbon surfactant, block copolymers having various types of polyalkylene oxide blocks, such as polyethylene oxide and polypropylene oxide, may be mentioned.

As suitable nonionic hydrocarbon surfactants, the surfactants described in paragraphs 0043 to 0052 of JP-A-2016-537499 may be mentioned.

As suitable siloxane surfactants, the surfactants described in US Patent Nos. 6,841,616 (Wille et al.) and 7,977,438 (Brothers et al.) may be mentioned.


(Oxidizing agent)


The oxidizing agent may, for example, be a hydrogen peroxide and a polymerization initiator.

As the polymerization initiator, the compounds exemplified as the polymerization initiator described in the above step A1, may be mentioned. As the polymerization initiator, a persulfate is preferred, and ammonium persulfate or potassium persulfate is more preferred.

As the aqueous medium, the aqueous medium to be used in step A1 may be mentioned.


(Procedure of step B1)


In step B1, the nucleation additive and the oxidizing agent are mixed in an aqueous medium to obtain a solution 2. In other words, in this step, in an aqueous medium, the nucleation additive is exposed to the oxidizing agent.

When the nucleation additive and the oxidizing agent are mixed in an aqueous medium, a solution in which lipophilic nucleation sites are dispersed in the aqueous medium is obtainable. More specifically, when a nucleation additive such as a polyalkylene oxide compound or a hydrocarbon-containing surfactant is mixed with an oxidizing agent, the hydrophilic portions of the nucleation additive are decomposed, and the hydrophobic portions of the nucleation additive become to be lipophilic nucleation sites. The lipophilic nucleation sites will be dispersed in the aqueous medium, which makes it possible to finely disperse the fluoropolymer at these sites.

Since the lipophilic nucleation sites are excellent in affinity with TFE, polymerization of TFE is likely to readily proceed in the solution 2 containing the lipophilic nucleation sites. That is, the lipophilic nucleation sites can be a place for a hydrophobic environment for polymerization of TFE.

The amount of the nucleation additive to be used, is at most 100 mass ppm, preferably from 1 to 50 mass ppm, more preferably from 1 to 25 mass ppm, to the amount of TFE to be supplied to the polymerization system (the amount of TFE to be used).

The amount of the oxidizing agent to be used, is preferably from 0.5 to 100 mass ppm, more preferably from 0.5 to 50 mass ppm, to the entire mass of the aqueous medium.

The temperature at which the nucleation additive and the oxidizing agent are mixed, is preferably from 20 to 120°C, more preferably from 40 to 120°C.

The mixing time for mixing the nucleation additive and the oxidizing agent is preferably from 0.05 to 1.0 hour.

It is preferred to add the water-soluble inorganic salt to the aqueous medium before or during the mixing of the nucleation additive and the oxidizing agent. Addition of the water-soluble inorganic salt is useful to increase the number of fluoropolymer particles to be formed during nucleation.

The amount of the water-soluble inorganic salt to be used, is preferably from 0.01 to 80 mass ppm, more preferably from 1 to 50 mass ppm, to the entire mass of the aqueous medium.

As the water-soluble inorganic salt, for example, sodium sulfite, sodium hydrogen sulfite, sodium chloride, potassium sulfite, potassium hydrogen sulfite, potassium carbonate, ammonium oxalate, sodium tetraborate, sodium acetate, ammonium carbonate, ammonium dihydrogen phosphate, or diammonium phosphate, may be mentioned, a sulfite is preferred, and sodium sulfite or ammonium sulfite is more preferred.


<Step B2>


Step B2 is a step of conducting polymerization of TFE in the solution 2 obtained in step B1, by not substantially adding a surfactant to the solution 2, to obtain an aqueous emulsion containing PTFE particles.

In this step, the same procedure as in the above-described step A2 is carried out except that the solution 2 is used instead of the solution 1, and therefore, its description is omitted.

The various properties of PTFE obtainable by step B2 are as described in the various properties of PTFE obtainable by step A2.

The above "not substantially adding" means that no surfactant is added, or even if a surfactant is added, the amount of the surfactant to be added is at most 200 mass ppm to the entire mass of the solution 2. Although there is no restriction on the lower limit, 0 mass ppm is preferred. That is, it is preferred that no surfactant is added to the solution 2 in step B2.

<Step B3>

Step 3 is a step of adding a nonionic surfactant to the aqueous emulsion obtained in step B2, and then concentrating the aqueous emulsion to obtain an aqueous dispersion of PTFE. That is, it is a step in which a nonionic surfactant is added to the PTFE low-concentration aqueous dispersion (corresponding to the above-described aqueous emulsion) obtained in step B2, and then, the PTFE low-concentration aqueous dispersion is concentrated to obtain a PTFE high-concentration aqueous dispersion (corresponding to the above described aqueous dispersion of PTFE). By carrying out step B3, it is possible to obtain an aqueous dispersion of PTFE showing a higher PTFE particle concentration than the PTFE particle concentration in the aqueous dispersion.

In this step, the same procedure as the above-described step A3 is carried out except that the aqueous emulsion obtained in step B2 is used instead of the aqueous emulsion obtained in step A2, and therefore, its description is omitted.

The various properties of the aqueous dispersion of PTFE obtainable by step B3 are as described in various properties of the aqueous dispersion of PTFE obtainable by step A3.

Further, after the nonionic surfactant is added to the aqueous emulsion obtained in step B2, and before the aqueous emulsion is concentrated, the polymerization initiator residue, etc. may be adsorbed and removed by an ion exchange resin or the like. Excess water-soluble ionic compounds will thereby be removed, whereby the coating performance of the aqueous dispersion of PTFE will be improved, and its application to an insulating material will be easy.

<<PTFE products>>

PTFE products mean films, sheets and fibers composed mainly of PTFE, heat resistant articles having a PTFE coating film, and articles containing PTFE as a sub-component, which are made from an aqueous dispersion of PTFE.

PTFE products include, for example, packing made by impregnating a base material consisting of woven cloth or braided strings made of glass fibers, aramid fibers, carbon fibers or various other synthetic or natural fibers, with an aqueous dispersion of PTFE, followed by drying; conveyor heat-resistant belts, membrane structure sheets for construction, packing and printed circuit boards, made by impregnating a base material consisting of woven cloth or braided strings made of glass fibers, aramid fibers, carbon fibers, etc. with an aqueous dispersion of PTFE, followed by baking at a temperature of at least the melting point of PTFE; kitchen utensils, such as frying pans, electric ovens, etc. made by coating a metal plate of aluminum, stainless steel or the like with an aqueous dispersion of PTFE blended with a pigment or heat-resistant resin, followed by baking; binders made by kneading an aqueous dispersion of PTFE and an active material powder for batteries, such as carbon, manganese dioxide, nickel hydroxide, etc.; raw materials for molding and molded products (anti-dripping agent) having an aqueous dispersion of PTFE mixed in order to prevent dripping during firing of plastic molded product of e.g. polycarbonate, ABS resin, etc.; powder of chemical fertilizer, lime, incinerated ash, etc. mixed with an aqueous dispersion of PTFE to reduce dust generation; sliding materials such as oilless bearing materials made by coating a porous material with a mixture made into a paste by mixing an aqueous dispersion PTFE and a filler such as lead, zinc, carbon powder, etc.; PTFE fibers obtained by adding a thickening agent such as viscose to an aqueous dispersion of PTFE, followed by pressure spinning in a coagulation bath, and then by baking; a PTFE ultra-thin sheet obtainable by coating a heat resistant sheet base material such as an aluminum sheet or stainless steel sheet, with an aqueous dispersion of PTFE, followed by baking and then, by peeling off the PTFE layer; coil insulation, interlayer insulation, and electrical insulation materials, which are thin films obtainable by casting from an aqueous dispersion of PTFE, and which are to be used for motors, transformers, relays, switches, etc.; and coating material, resin, rubber material or the like having lubricity and stain resistance improved by adding an aqueous dispersion of PTFE.

PTFE products are obtainable by coating or mixing the aqueous dispersion of PTFE, followed by drying or heat treatment at a temperature of from room temperature to 420°C. The temperature for the above drying or heat treatment is preferably from 50 to 400°C, more preferably from 100 to 395°C.

The PTFE content in PTFE products varies depending on the application, but is preferably from 0.01 to 100 mass%, more preferably from 0.1 to 100 mass%, further preferably from 1 to 100 mass%.

EXAMPLES

In the following, the present invention will be described in more detail with reference to Examples and Comparative Example, but the present invention is not limited to them. Here, Ex. 1 to 6 as described below, correspond to Examples of the present invention, and Ex. 7 corresponds to Comparative Example.

Various measurement methods and evaluation methods are as follows.

(A) Average primary particle size of PTFE particles (hereinafter referred to also as "PPS")

Measured by using an aqueous dispersion of PTFE as a sample and using a laser scattering particle size distribution analyzer (manufactured by Horiba, product name "LA-920").

(B) Standard specific gravity (hereinafter referred to also as "SSG")

Measured in accordance with ASTM D4895-04.

12.0 g of a sample (PTFE powder) was weighed and held in a cylindrical mold having an inner diameter of 28.6 mm at 34.5 MPa for 2 minutes. This was placed in an oven of 290°C and heated at a rate of 120°C/hr. Further, after holding at 380°C for 30 minutes, the temperature was lowered at a rate of 60°C/hr and held at 294°C for 24 minutes. After the sample was kept in a desiccator of 23°C for 12 hours, the specific gravity value of the sample at 23°C against water was measured, and this was adopted as the standard specific gravity. The smaller the SSG value, the higher the molecular weight.

(C) PTFE concentration and surfactant concentration

About 7 g of an aqueous dispersion of PTFE was put in an aluminum dish (mass W0) and weighed (mass W1), and from the mass after drying at 120°C for 1 hour (mass W2), and the mass after drying at 380°C for 35 minutes (mass W3), the PTFE concentration and the surfactant concentration (ratio of the surfactant to the mass of PTFE) were obtained by the following formula.

$$\text{PTFE concentration (mass\%)} = [(W3-W0)/(W1-W0)] \times 100$$

$$\text{Surfactant concentration (mass\%/PTFE)} = [(W2-W3)/(W3-W0)] \times 100$$

(D) Viscosity

The viscosity of the aqueous dispersion of PTFE was measured by a Brookfield viscometer using a #1 spindle at the liquid temperature of 23°C and 60 rpm.

(E) pH

The pH of the aqueous dispersion of PTFE was measured by the glass electrode method.

(F) Surface tension

The surface tension of the aqueous dispersion of PTFE was measured by the ring method using a platinum wire ring.

(G) CFT (Crack Critical Film Thickness)

The aqueous dispersion of PTFE was applied to an aluminum plate with a thickness of 0.5 mm by using an applicator whereby the coating thickness varies continuously up to 200 μm, and dried at 120°C for 10 minutes, followed by baking at 380°C for 10 minutes.

The PTFE coating film was observed, and the thicknesses of the tips of the formed cracks were measured by a permascope at five points, whereby the average value (μm) was obtained and adopted as CFT (crack critical film thickness).

(H) Measurement of fluorinated oligomers

A sample (PTFE powder) was subjected to Soxhlet extraction with ethanol for 5 hours, and the extract obtained by ethanol was subjected to LC/MS analysis, whereby mainly a group of $C_{6-34}$ $CF_2$ chain oligomers was quantified by using, as standard products, perfluorooctyl sulfonic acid and perfluorooctanoic acid. A case where the presence of the oligomers was confirmed was judged to be "present", and a case where the presence of the oligomers was not confirmed, was judged to be "absent".

Here, in the LC/MS analysis, Agilent 1260 series HPLC/6460MS was used, and as the column, cadenza CD-C18 2 mm$\varphi \times$100 mm, 3 $\mu$m particle size, manufactured by Imtakt, was used. Further, at the time of the measurement, a gradient of an aqueous solution of ammonium acetate and methanol was applied.

(Ex. 1)

[Step A1]

Into a 100 L stainless steel autoclave, paraffin wax (1,500 g) and deionized water (60 L) were charged. After purging the autoclave with nitrogen, the pressure was reduced, and i-butyl methacrylate (i-BMA) (0.1 g) and deionized water (0.5 L) were poured and charged into the autoclave.

Next, the inside of the autoclave was kept in a subatmospheric state, and the solution in the autoclave was heated to 75°C with stirring. Then, a solution having ammonium persulfate (0.055 g) as a polymerization initiator, dissolved in deionized water (1 L), was injected into the autoclave to polymerize i-butyl methacrylate.

[Step A2]

After 20 minutes, the pressure was raised by TFE to 1.96 MPa, and a solution having ammonium persulfate (0.54 g) and disuccinic acid peroxide (concentration 80 mass%, rest being water) (53 g) dissolved in warm water (1 L) at about 70°C, was injected into the autoclave.

After the internal pressure in the autoclave dropped to 1.89 MPa, TFE was added to maintain the pressure at 1.96 MPa, whereby the polymerization of TFE was allowed to proceed.

When the amount of TFE added became 9 kg, the reaction was terminated, and TFE in the autoclave was released into the atmosphere. The polymerization time was 94 minutes.

The solid content concentration (concentration of PTFE particles) of the aqueous emulsion was about 11 mass%. Further, the average primary particle size of the PTFE particles in the aqueous emulsion was 0.24 $\mu$m (240 nm).

A portion of the obtained aqueous emulsion was adjusted to 20°C and stirred to coagulate the PTFE particles to obtain a PTFE powder. Then, this PTFE powder was dried at 275°C together with an ammonium carbonate aqueous solution. The SSG of the obtained PTFE powder was 2.201.

Further, in the obtained PTFE powder, no byproduct fluorinated oligomers were observed.

[Step A3]

To the aqueous emulsion obtained in step A2, a nonionic surfactant (a) (manufactured by Nippon Nyukazai Co., Ltd., NEWCOL 1308FA, $C_{13}H_{27}$-$(OC_2H_4)_8$-$OCH(CH_3)CH_2$-OH) at a ratio of 2.7 mass% to the mass of PTFE, ammonium laurate at a ratio of 0.06 mass% to the mass of PTFE, and triethanolamine lauryl sulfate at a rate of 0.02 mass% to the mass of PTFE, were dissolved, whereupon concentration was conducted by an electrophoretic method. The supernatant was removed, to obtain an aqueous dispersion of PTFE, in which the PTFE concentration was 65.8 mass%, and the nonionic surfactant (a) concentration was 2.1 mass% to the mass of PTFE.

To this aqueous dispersion of PTFE, a nonionic surfactant (b) (manufactured by Nippon Nyukazai Co., Ltd., NEWCOL G1301H, $C_{13}H_{27}$-$OCH_2CH(C_2H_5)$-$(OC_2H_4)_8$-OH) at a ratio of 1.2 mass% to the mass of PTFE, a nonionic surfactant (c) (manufactured by Nippon Nyukazai Co., Ltd., NEWCOL FAA09801, $C_{13}H_{27}$-$OCH_2CH(C_2H_5)$-$(OC_2H_4)_{11}$-OH) at a ratio of 1.2 mass% to the mass of PTFE, PEO at a ratio of 0.1 mass% to the mass of PTFE, water and ammonia water, were added, and the nonionic surfactant (a) was added so that the content of the nonionic surfactant (a) to the mass of PTFE would be 2.4 mass%, to obtain an aqueous dispersion of PTFE having a PTFE concentration of 60.5 mass% and a pH of 10.2. The viscosity of the obtained aqueous dispersion of PTFE at 23°C was 25.8 mPa·s, pH = 10.2, and the surface tension was 30 (mN/m). Further, the average primary particle size of PTFE particles in the aqueous dispersion of PTFE was the same as the average primary particle size of PTFE particles measured in the above aqueous emulsion.

This aqueous dispersion of PTFE was used for measurement of the crack critical film thickness. The evaluation results of the obtained aqueous dispersion of PTFE are shown in Table 1.

(Ex. 2)

[Step B1]

Into a 100 L stainless steel autoclave, paraffin wax (1,500 g) and deionized water (60 L) were charged. After purging the autoclave with nitrogen, the pressure was reduced, and PEG1000 (number average molecular weight: 1,000, polyethylene glycol) (0.05 g) and deionized water (1 L) were poured and charged into the autoclave.
Next, the inside of the autoclave was kept in a subatmospheric state, and the solution in the autoclave was heated to 75°C with stirring. Then, a solution having ammonium persulfate (0.11 g) as an oxidizing agent, dissolved in deionized water (1 L), was injected into the autoclave.

[Step B2]

After 10 minutes, the pressure was raised by TFE to 1.96 MPa, and a solution having ammonium persulfate (0.54 g) and disuccinic acid peroxide (concentration 80 mass%, rest being water) (53 g) dissolved in warm water (1 L) at about 70°C, was injected into the autoclave.
After the internal pressure in the autoclave dropped to 1.89 MPa, TFE was added to maintain the pressure at 1.96 MPa, whereby the polymerization of TFE was allowed to proceed.
When the amount of TFE added became 9 kg, the reaction was terminated and TFE in the autoclave was released into the atmosphere. The polymerization time was 88 minutes.
The solid content concentration (concentration of PTFE particles) of the aqueous emulsion was about 11 mass%. Further, the average primary particle size of the PTFE particles in the aqueous emulsion was 0.24 $\mu$m (240 nm).
A portion of the obtained aqueous emulsion was adjusted to 20°C and stirred to coagulate the PTFE particles to obtain a PTFE powder. Then, the PTFE powder was dried at 275°C together with an ammonium carbonate aqueous solution. The SSG of the obtained PTFE powder was 2.204.
Further, in the obtained PTFE powder, no byproduct fluorinated oligomers were observed.

[Step B3]

The aqueous emulsion obtained in step B2 was concentrated in the same manner as in Ex. 1 to obtain an aqueous dispersion of PTFE. Here, the average primary particle size of the PTFE particles in the aqueous dispersion of PTFE was the same as the average primary particle size of the PTFE particles measured in the above aqueous emulsion. The evaluation results are shown in Table 1.

(Ex. 3)

An aqueous dispersion of PTFE was obtained in accordance with the same procedure as in Ex. 1, except that instead of the nonionic surfactant (a), a nonionic surfactant (d) (manufactured by DOW, Tergitol TMN100X, $C_{12}H_{25}$-$(OC_2H_4)_{10}$-OH) was used. The evaluation results are shown in Table 1.

(Ex. 4)

An aqueous dispersion of PTFE was obtained in accordance with the same procedure as in Ex. 2, except that instead of the nonionic surfactant (a), the nonionic surfactant (d) was used. The evaluation results are shown in Table 1.

(Ex. 5)

[Step A1]

Into a 100 L stainless steel autoclave, paraffin wax (1,500 g) and deionized water (60 L) were charged. After purging the autoclave with nitrogen, the pressure was reduced, and i-butyl methacrylate (i-BMA) (0.1 g) and deionized water (0.5 L) were poured and charged into the autoclave.
Next, the inside of the autoclave was kept in a subatmospheric state, and the solution in the autoclave was heated to 75°C with stirring. Then, a solution having ammonium persulfate (0.055 g) as a polymerization initiator dissolved in deionized water (1 L), was injected into the autoclave to polymerize i-butyl methacrylate.

[Step A2]

After 20 minutes, the pressure was raised by TFE to 1.96 MPa, and a solution having ammonium persulfate (0.54 g) and disuccinic acid peroxide (concentration 80 mass%, rest being water) (53 g) dissolved in warm water (1 L) at about 70°C, was injected into the autoclave. Then, TFE was added so that the internal pressure in the autoclave was maintained at 1.96 MPa, whereby the polymerization of TFE was allowed to proceed. After adding TFE in an amount of 1 kg, a solution having ammonium vinyl sulfonate (5.0 g) dissolved in deionized water (1.5 L) was supplied so that the amount of ammonium vinyl sulfonate became 0.15 g to every 1 kg of TFE to be supplied, while confirming the amount of TFE to be supplied by a flow meter.

When the amount of TFE added became 9 kg, the reaction was terminated, and TFE in the autoclave was released into the atmosphere. The polymerization time was 97 minutes.

The solid content concentration (concentration of modified PTFE) of the aqueous emulsion was about 12 mass%. Further, the average primary particle size of the modified PTFE particles in the aqueous emulsion was 0.21 $\mu$m.

A portion of the obtained aqueous emulsion was adjusted to 20°C and stirred to coagulate the modified PTFE particles to obtain a modified PTFE powder. Then, the modified PTFE powder was dried at 275°C together with an ammonium carbonate aqueous solution. The SSG of the obtained modified PTFE powder was 2.193.

Further, in the obtained modified PTFE powder, no byproduct fluorinated oligomers were observed.

[Step A3]

The aqueous emulsion obtained in step A2 was concentrated in the same manner as in Ex. 1 to obtain an aqueous dispersion of PTFE. Here, the average primary particle size of the PTFE particles in the aqueous dispersion of PTFE was the same as the average primary particle size of the PTFE particles measured in the above aqueous emulsion. The evaluation results are shown in Table 1.

(Ex. 6)

An aqueous dispersion of PTFE was obtained in accordance with the same procedure as in Ex. 5, except that instead of the nonionic surfactant (a), the nonionic surfactant (d) was used. The evaluation results are shown in Table 1.

(Ex. 7)

A PTFE powder was obtained in accordance with the same procedure as in the above Ex. 2, except that in step B1 in Ex. 2, the amount of PEG1000 used was changed from 0.05 g to 0.39 g, in step B2 in Ex. 2, TFE was added to maintain the internal pressure in the autoclave to be at 1.96 MPa, and as advancing the polymerization of TFE, 1 kg of TFE was added, and then, a solution having sodium lauryl sulfate (SLS) dissolved in deionized water was supplied while confirming the amount of TFE to be supplied by a flow meter so that SLS would become to be 1.48 g to 1 kg of TFE to be supplied, and the drying temperature was changed from 275°C to 220°C. In the obtained PTFE powder, as the fluorinated oligomer group ($H(CF_2CF_2)_nSO_3H$ (n=3 to 16)), there was a distribution with a peak in the vicinity of n=9 or 10, and a total of 230 mass ppm was detected. Since fluorinated oligomers were detected and it is impossible to remove them completely by an ion exchange resin, etc., concentration was not conducted.

In Table 1, the column for "Amount of non-fluorinated monomer used" indicates the amount of the non-fluorinated monomer used to the amount of TFE supplied to the polymerization system.

The column for "Amount of nucleation additive used" indicates the amount of the nucleation additive used to the amount of TFE supplied to the polymerization system.

[Table1]

| Table 1 | Ex. 1 | Ex. 2 | Ex. 3 | Ex. 4 | Ex. 5 | Ex. 6 |
|---|---|---|---|---|---|---|
| Amount of non-fluorinated monomer used (mass ppm) | 11 | - | 11 | - | 11 | 11 |
| Amount of nucleation additive used (mass ppm) | - | 6 | - | 6 | - | - |

(continued)

| Table 1 | | Ex. 1 | Ex. 2 | Ex. 3 | Ex. 4 | Ex. 5 | Ex. 6 |
|---|---|---|---|---|---|---|---|
| Aqueous dispersion | Average particle size ($\mu$m) | 0.24 | 0.24 | 0.24 | 0.22 | 0.21 | 0.21 |
| | SSG | 2.201 | 2.204 | 2.199 | 2.200 | 2.193 | 2.193 |
| | Viscosity (mPa·s) | 25.8 | 25.5 | 24.2 | 24.2 | 25.5 | 31.5 |
| | pH | 10.2 | 10.2 | 10.5 | 10.5 | 10.0 | 10.2 |
| | Surface tension (mN/m) | 30 | 31 | 30 | 30 | 31 | 29 |
| Crack critical film thickness (CFT) ($\mu$m) | | 12 | 10 | 20 | 24 | 11 | 13 |
| Presence or absence of fluorinated oligomer | | Absent | Absent | Absent | Absent | Absent | Absent |

As shown in Table 1, according to the production method of the present invention, it is possible to produce aqueous dispersions of PTFE showing the desired effects.

The entire disclosure of Japanese Patent Application No. 2019-196139 filed on October 29, 2019 including specification, claims, drawings and summary is incorporated herein by reference in its entirety.

**Claims**

1. A method for producing an aqueous dispersion of polytetrafluoroethylene, which comprises

    step A1 of polymerizing a non-fluorinated monomer in an aqueous medium to obtain a solution 1 containing a polymer comprising units based on said non-fluorinated monomer,
    step A2 of conducting polymerization of tetrafluoroethylene in said solution 1 without substantially adding a surfactant to said solution 1 to obtain an aqueous emulsion containing polytetrafluoroethylene particles, and
    step A3 of adding a nonionic surfactant to said aqueous emulsion, and then concentrating said aqueous emulsion to obtain an aqueous dispersion of polytetrafluoroethylene, wherein
    the amount of said non-fluorinated monomer used is at most 200 mass ppm to the amount of said tetrafluoroethylene supplied to the polymerization system.

2. The method for producing an aqueous dispersion of polytetrafluoroethylene according to Claim 1, wherein said non-fluorinated monomer is a monomer represented by the formula (1):

    Formula (1)        $CH_2=CR^{11}-L^1-R^{12}$

    in the formula (1), $R^{11}$ represents a hydrogen atom or an alkyl group, $L^1$ represents a single bond, -CO-O-*, -O-CO-* or -O-, * represents the bonding position to $R^{12}$, and
    $R^{12}$ represents a hydrogen atom, an alkyl group, an alkenyl group or a nitrile group, provided that when $L^1$ is a single bond, $R^{12}$ is a nitrile group.

3. The method of producing an aqueous dispersion of polytetrafluoroethylene according to Claim 1 or 2, wherein the content of said polytetrafluoroethylene particles in said aqueous dispersion of polytetrafluoroethylene is from 50 to 70 mass%.

4. The method of producing an aqueous dispersion of polytetrafluoroethylene according to any one of Claims 1 to 3, wherein the content of said nonionic surfactant in said aqueous dispersion of polytetrafluoroethylene is from 1 to 20 mass% to the mass of polytetrafluoroethylene.

5. A method for producing an aqueous dispersion of polytetrafluoroethylene, which comprises

    step B1 of mixing at least one nucleation additive selected from the group consisting of polyalkylene oxide compounds and hydrocarbon-containing surfactants, and an oxidizing agent in an aqueous medium to obtain a solution 2,
    step B2 of conducting polymerization of tetrafluoroethylene in said solution 2 without substantially adding a surfactant to said solution 2, to obtain an aqueous emulsion containing polytetrafluoroethylene particles, and step B3 of adding a nonionic surfactant to said aqueous emulsion, and then concentrating said aqueous emulsion to obtain an aqueous dispersion of polytetrafluoroethylene, wherein
the amount of said nucleation additive used is at most 100 mass ppm to the amount of said tetrafluoroethylene supplied to the polymerization system.

6. The method for producing an aqueous dispersion of polytetrafluoroethylene according to Claim 5, wherein the content of said polytetrafluoroethylene particles in said aqueous dispersion of polytetrafluoroethylene is from 50 to 70 mass% to the entire amount of said aqueous dispersion of polytetrafluoroethylene.

7. The method for producing an aqueous dispersion of polytetrafluoroethylene according to Claim 5 or 6, wherein said nucleation additive is a polyalkylene oxide compound.

8. The method for producing an aqueous dispersion of polytetrafluoroethylene according to any one of Claims 5 to 7, wherein the amount of said oxidizing agent used is from 0.5 to 100 mass ppm to the entire mass of said aqueous medium.

9. The method for producing an aqueous dispersion of polytetrafluoroethylene according to any one of Claims 5 to 8, wherein the content of said nonionic surfactant in said aqueous dispersion of polytetrafluoroethylene is from 1 to 20 mass% to the mass of polytetrafluoroethylene.

**INTERNATIONAL SEARCH REPORT**

| International application No. |
|---|
| PCT/JP2020/040421 |

A. CLASSIFICATION OF SUBJECT MATTER
C08F265/06(2006.01)i; C08F283/06(2006.01)i; C08L51/00(2006.01)i;
C08L51/08(2006.01)i; C08F2/ 22(2006.01)i; C08F2/44(2006.01)i
FI: C08L51/00; C08F265/06; C08F2/22; C08L51/08; C08F2/44 C; C08F283/06
According to International Patent Classification (IPC) or to both national classification and IPC

B. FIELDS SEARCHED

Minimum documentation searched (classification system followed by classification symbols)
C08F265/06; C08F283/06; C08L51/00; C08L51/08; C08F2/22; C08F2/44

Documentation searched other than minimum documentation to the extent that such documents are included in the fields searched
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2019/065640 A1 (AGC INC.) 04 April 2019 (2019- | 1-4 |
| A | 04-04) claims, examples | 5-9 |
| Y | JP 2007-511657 A (3M INNOVATIVE PROPERTIES CO.) 10 | 1-4 |
| A | May 2007 (2007-05-10) paragraph [0008] | 5-9 |
| Y | JP 2005-501956 A (3M INNOVATIVE PROPERTIES CO.) 20 | 1-4 |
| A | January 2005 (2005-01-20) paragraph [0006] | 5-9 |
| X | JP 2009-029723 A (DAIKIN INDUSTRIES, LTD.) 12 | 5-6, 8-9 |
| Y | February 2009 (2009-02-12) claims, paragraphs | 1-4 |
| A | [0083]-[0084] | 7 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 December 2020 (17.12.2020) | 28 December 2020 (28.12.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/040421

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-542309 A (E.I. DU PONT DE NEMOURS AND COMPANY) 21 November 2013 (2013-11-21) entire text | 1-9 |

Form PCT/ISA/210 (continuation of second sheet) (January 2015)

**INTERNATIONAL SEARCH REPORT**
Information on patent family members

International application No.

PCT/JP2020/040421

| Patent Documents referred in the Report | Publication Date | Patent Family | Publication Date |
|---|---|---|---|
| WO 2019/065640 A1 | 04 Apr. 2019 | CN 111148773 A<br>pp. 2, 13-14 | |
| JP 2007-511657 A | 10 May 2007 | US 2005/0107518 A1<br>paragraph [0009]<br>EP 1533325 A1<br>paragraph [0008]<br>CN 1882617 A<br>pp. 7-8<br>WO 2005/052013 A1<br>pp. 2-3 | |
| JP 2005-501956 A | 20 Jan. 2005 | US 2004/0186219 A1<br>paragraph [0006]<br>CN 1551909 A<br>p. 5<br>WO 2003/020836 A1<br>p. 2 | |
| JP 2009-029723 A | 12 Feb. 2009 | (Family: none) | |
| JP 2013-542309 A | 21 Nov. 2013 | US 2012/0116017 A1<br>EP 3533811 A1<br>CN 103201301 A<br>WO 2012/064846 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016537499 A
- US 6841616 B, Wille
- US 7977438 B, Brothers
- JP 2019196139 A